# EUROPEAN PATENT APPLICATION

(11) **EP 4 679 609 A1**
(43) Date of publication of application: **14.01.2026**
(21) Application number: 25174950.3
(22) Date of filing: 08.05.2025
(51) Int. Cl.: H01M 50/516

(54) **CELL LEAD SUPPORT MODULE**

(30) Priority: 10.07.2024 KR 20240090832
(71) Applicant: Hyundai Mobis Co., Ltd., Gangnam-gu Seoul 06141 (KR)
(72) Inventor: PARK, Jin Soo, 16891 Yongin-si, Gyeonggi-do (KR)
(74) Representative: Jung, Minkyu

(57) **Abstract**

A cell lead support module including a cell lead guide portion applied to an end of a battery pack, including an end coupled to a sensing assay, to guide a battery cell in coupling to the battery cell; and a counter jig interpolated into the cell lead guide portion to support a cell lead of the battery cell on a side of the battery cell. The counter jig includes a support portion to support the cell lead in a first end of the counter jig contacting the cell lead of the battery cell; and an aiming portion including a coupling reference point of the counter jig, in a second end of the counter jig.

## Description

### CROSS-REFERENCE TO RELATED APPLICATION

### BACKGROUND

### Field of the Invention

The present disclosure relates to a module supporting a lead of a battery cell by being applied to a battery pack.

### Description of the Related Art

For a battery module including battery cells stacked in series or in parallel, electrical connection is implemented through welding between leads of the battery cells and a bus bar for serial/parallel connection between the battery cells. In this case, cell leads and the bus bar should be spaced closely for welding, and thus a seating surface needs to be strongly pressed with a welding jig. However, the cell leads may be drawn into an empty space on the battery cell side when the seating surface is strongly pressed with the welding jig, and thus to support the cell leads, a jig-in counter bar is used on a rear surface of the bus bar to support rear surfaces of the battery cells. The counter bar includes a circular counter bar favorable to position regulation and a trapezoid counter bar having a strong support force.

More specifically, as the circular counter bar is assembled by connecting a tool of an assembly robot to a center of a bottom surface and matching a position of the center to a center of a hole, making it easy to position a facility and thus reducing an assembly tolerance, but due to a linear portion contacting the cell leads to endure the force of the welding jig, a sufficient support force may not be secured.

Moreover, the trapezoid counter bar is favorable to securing a stable and strong support force as a portion contacting the cell leads to endure the force of the welding jig forms a surface, but the position of the center is not clear such that when the counter bar is inserted into the hole in connection with the assembly robot, the assembly tolerance increases.

### [Related Art Document]

### [Patent Document]

(Patent Document 1) Korean Patent Laid-Open Publication No. 10-2021-0041447 "Leads welding braket for battery cell and the welding method in using it"

### SUMMARY

The present disclosure aims to provide a cell lead support module in which a counter jig includes both a circular shape and a trapezoid shape to stably support a welding surface and control of the position of the counter jig is facilitated to improve assembly of the counter jig, thus securing a stable welding quality, whereby disposal costs and quality costs due to welding defects may be reduced.

According to an embodiment of the present disclosure, a cell lead support module includes a cell lead guide portion applied to an end of a battery pack, including an end coupled to a sensing assay, and configured to guide a battery cell in coupling to the battery cell; and a counter jig interpolated into the cell lead guide portion to support a cell lead of the battery cell on a side of the battery cell. The counter jig includes: a support portion configured to support the cell lead in a first end of the counter jig contacting the cell lead of the battery cell; and an aiming portion including a coupling reference point of the counter jig, in a second end of the counter jig.

The counter jig may be a pillar extending in a height direction, a terminal surface of the support portion may be flat, the aiming portion may include a cross-section in an arc shape having a central axis, and the coupling reference point may be a center of the arc.

The counter jig may include a side surface connecting the support portion to the aiming portion, and a chord connecting opposite ends of the arc formed on the cross-section of the aiming portion, the side surface of the counter jig, and a terminal of the support portion may form a trapezoid shape.

The counter jig may include a side surface connecting the support portion to the aiming portion, and the side surface may be formed in parallel to an outer surface of the cell lead guide portion, the outer surface facing a surface of the cell lead guide portion contacting the side surface.

The cell lead guide portion may include at least one jig receiving pillar in which the counter jig is received, and the jig receiving pillar may extend in a height direction perpendicular to a stacking direction of the battery cell and a compression direction of a welding jig.

The jig receiving pillar may include, in at least any one of a first end or a second end in the height direction, a receiving groove into which the counter jig is inserted.

The jig receiving pillar may include a receiving hole perforated, into which the counter jig is interpolated in the height direction.

The cell lead guide portion may include a guide pillar in which the counter jig is not received, and the jig receiving pillar and the guide pillar may be arranged alternately with each other in a stacking direction of the battery cell.

The jig receiving pillar and the guide pillar may include at least one heat-dissipating groove.

The heat-dissipating groove may be disposed in a region except for a region in which the receiving groove of the jig receiving pillar is formed in the height direction.

### BRIEF DESCRIPTION OF THE DRAWINGS

FIG. 1 is a partial perspective view of a battery pack to which a cell lead support module according to the present disclosure is applied;
FIG. 2 is a top view showing a coupling relationship between a cell lead support module according to the present disclosure and a battery pack;
FIG. 3 is a plan view showing a cross-section perpendicular to a height direction of a counter jig according to the present disclosure;
FIG. 4 is a partial top view showing a cell lead guide portion to which a counter jig according to the present disclosure is coupled;
FIG. 5 is a full perspective view of a cell lead guide portion according to the present disclosure;
FIG. 6 is a partial perspective view of a cell lead guide portion according to the present disclosure;
FIG. 7 is a schematic diagram showing a 1st-1 embodiment of a jig receiving pillar according to the present disclosure;
FIG. 8 is a schematic diagram showing a 1st-2 embodiment of a jig receiving pillar according to the present disclosure; and
FIG. 9 is a schematic diagram showing a second embodiment of a jig receiving pillar according to the present disclosure.

### DETAILED DESCRIPTION

Hereinafter, the technical idea of the present disclosure will be described more specifically using the attached drawings. The terms and words used in the present specification and claims described above should not be construed as being limited to ordinary or dictionary meanings, and should be interpreted as meanings and concepts consistent with the technical idea of the disclosure based on the principle that the present inventors may appropriately define the concept of the terms to describe their invention in the best way.

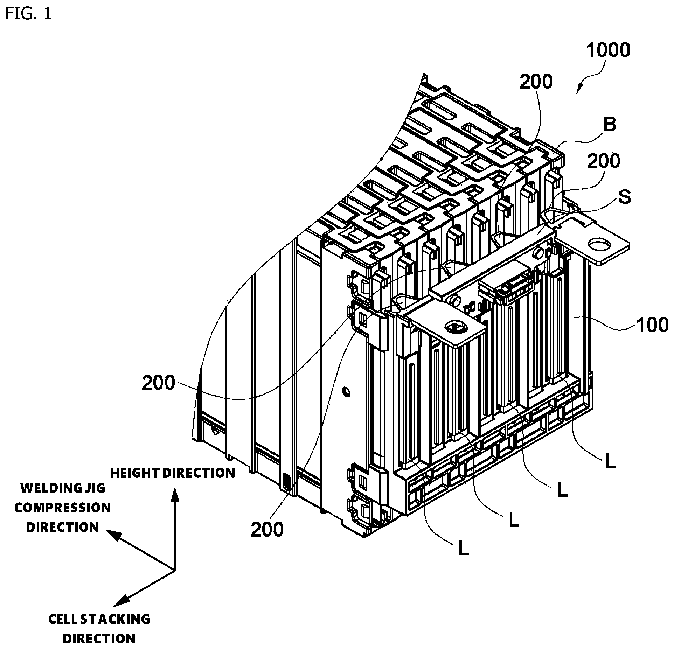

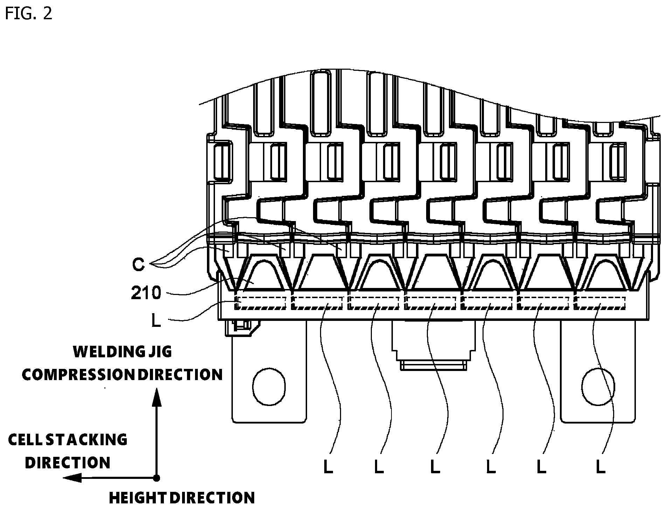

Hereinafter, a basic structure of a cell lead support module 1000 will be described with reference to FIGS. 1 and 2.

The cell lead support module 1000 according to the present disclosure may be applied to a battery pack B and may include a cell lead guide portion 100 as shown in FIG. 1. The cell lead guide portion 100 may be applied to an end of the battery pack B, may have an end coupled to a sensing assay S, and may guide a direction in which a battery cell C is inserted when coupled to the battery cell C. The cell lead guide portion 100 may include a jig receiving pillar 110 and a guide pillar 120 which are arranged alternately with each other. As shown in FIG. 2, the present disclosure may include a counter jig 200 interpolated into the cell lead guide portion 100. The counter jig 200 may support a cell lead L of the battery cell C on a side of the battery cell C and include the counter jig 200. The counter jig 200 may include, on an end thereof contacting the cell lead L of the battery cell C, a support portion 210 supporting the cell lead L, and, on the other end thereof, an aiming portion 220 including a coupling reference point 221 of the counter jig 200.

As the counter jig 200 includes the support portion 210 supporting a welding surface and the aiming portion 220 including the coupling reference point 221 for aiming a position of the counter jig 200, the counter jig 200 may more stably support the welding surface, and control of the position of the counter jig 200 may be facilitated to improve assimilability of the counter jig 200, thereby securing a stable welding quality, such that disposal costs and quality costs due to welding defects may be reduced.

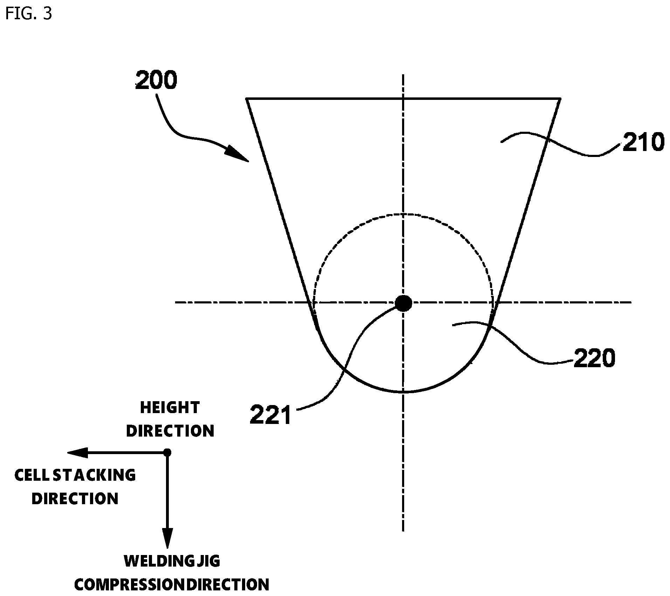

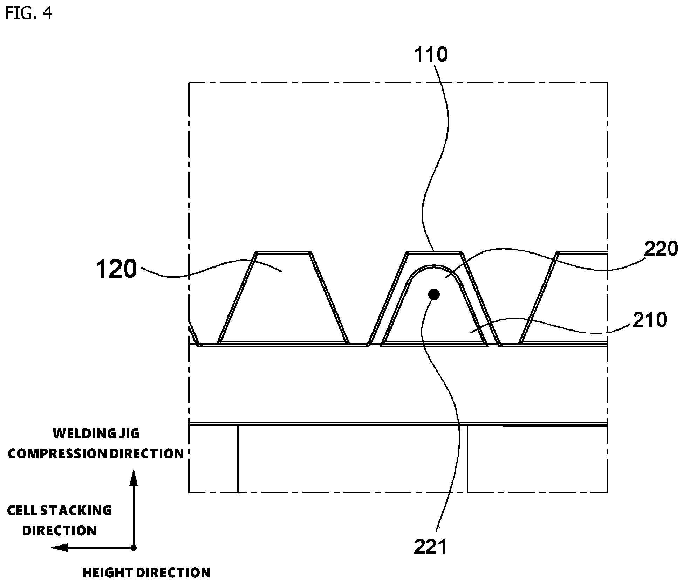

With reference to FIGS. 3 and 4, the counter jig 200 according to the present disclosure will be described in more detail.

The counter jig 200 may be a pillar extending in a predetermined height direction, and as shown in FIG. 3, a terminal surface of the support portion 210 may be formed flat and the aiming portion 220 may have a cross-section in an arc shape having a predetermined central axis. In this case, the coupling reference point 221 may be a center of the arc included in the aiming portion 220. A robot tool for assembling the counter jig 200 may be coupled to the coupling reference point 221.

Thus, as shown in FIG. 4, once the counter jig 200 is interpolated into the jig receiving pillar 110 of the cell lead guide portion 100, the support portion 210 having the terminal surface formed flat may surface-contact the cell lead L, thereby stably supporting a load applied from the welding jig. The aiming portion 220 may be formed to have a cross-section including an arc, i.e., in a cylindrical shape, making it easy to identify the center thereof, i.e., the coupling reference point 221 and facilitating subsequent coupling of the robot tool and thus more accurately controlling a coupling position of the counter jig 200. Consequently, a welding defect rate may be minimized.

In addition, the counter jig 200 may include a side surface 230 connecting the support portion 210 to the aiming portion 220, and a chord connecting opposite ends of the arc formed on the cross-section of the aiming portion 220, a side surface 230 of the counter jig 200, and the terminal surface of the support portion 210 may form a trapezoid shape. In this case, the jig receiving pillar 110 and the guide pillar 120 of the cell lead guide portion 100 receiving the counter jig 200 may be correspondingly formed to have a triangular prism shape. As an insertion direction of the cell leads L is guided along an outer surface of the cell lead guide portion 100, the positions of the cell leads L may be supported and the cell leads L may also be inserted in a gathered form through such a structure of the counter jig 200 and the cell lead guide portion 100 when welding is performed.

The side surface 230 of the counter jig 200 may be formed in parallel to an outer surface of the cell lead guide portion 100, the outer surface facing a surface of the jig receiving pillar 110 contacting the side surface 230, more clearly, an outer surface of the jig receiving pillar 110. More specifically, the cell lead guide portion 100 may guide the insertion direction of the cell leads L, and may guide the cell leads L such that the cell leads L are inserted in a gathered form in case that the jig receiving pillar 110 and the guide pillar 120 are formed in a triangular prism shape, and may guide the cell leads L such that the cell leads L are inserted in parallel to one another without being gathered in case that facing surfaces of the jig receiving pillar 110 and the guide pillar 120 are formed in parallel to each other. In this case, the side surfaces 230 of the counter jig 200 may be parallel to each other.

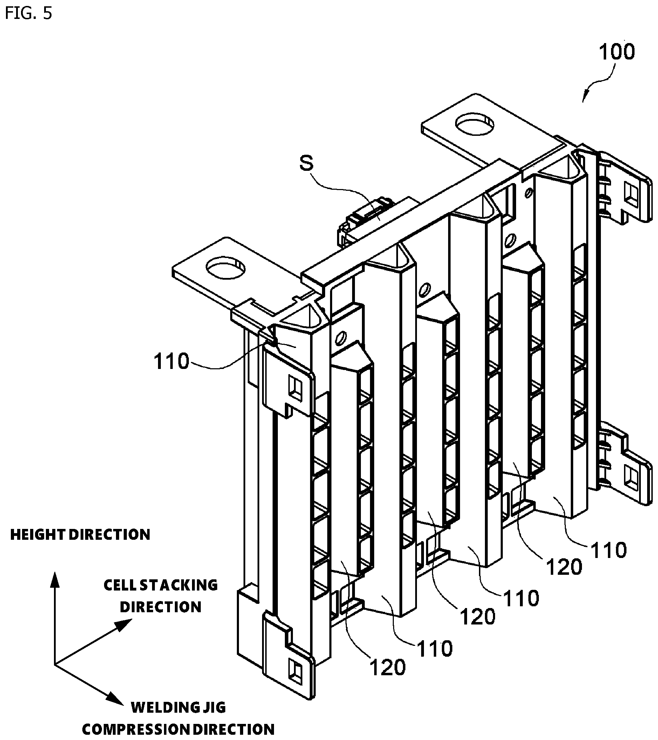

Hereinafter, the cell lead guide portion 100 according to the present disclosure will be described with reference to FIGS. 5 to 9.

As shown in FIG. 5, the cell lead guide portion 100 may include at least one pillar 110 in which the counter jig 200 is received therein. The jig receiving pillar 110 may extend in a predetermined height direction perpendicular to a stacking direction of the battery cells C and a compression direction of the welding jig. The cell lead guide portion 100 may also include a guide pillar 120 in which the counter jig 200 is not received, and the jig receiving pillar 110 and the guide pillar 120 may be arranged alternately with each other in the stacking direction of the battery cells C. More specifically, as the jig receiving pillar 110 is arranged at an edge and a central part of the cell lead guide portion 100, the positions of the cell leads L may be smoothly supported and at the same time, the number of counter jigs 200 may be efficiently reduced, thus minimizing a manufacturing cost.

The cell lead guide portion 100 may also include a coupling portion coupled to the battery pack B at a position contacting opposite surfaces of the battery pack B in the stacking direction of the battery cells C, and the coupling portion may include a hole into which a fastener such as a screw is inserted and fixed. As opposite edges of the cell lead guide portion 100 are coupled to the battery pack B through a screw, etc., the edges of the cell lead guide portion 100 may be prevented from being removed from the battery pack B when the welding jig compresses the cell lead guide portion 100 and the cell leads L, thereby improving the stability of the entire structure.

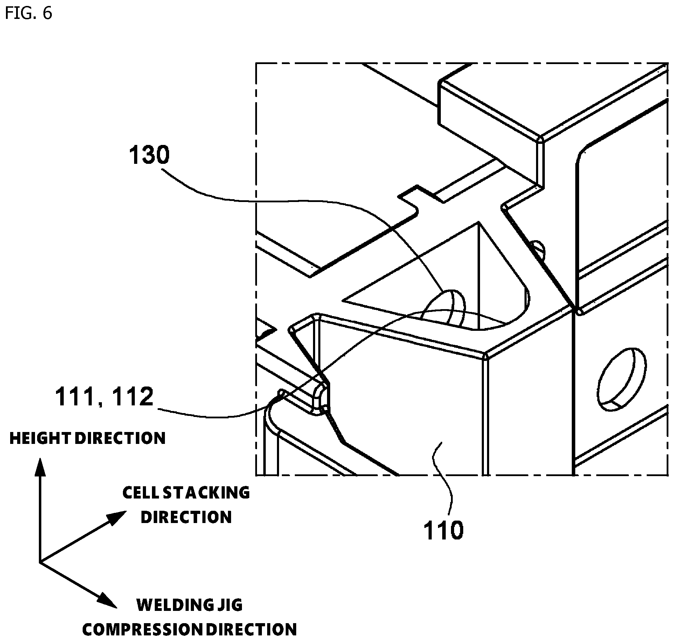

The cell lead guide portion 100 may include a welding hole 130 a welding hole 130 perforated in the compression direction of the welding jig, as shown in FIG. 6. A welding tip and a welding metal may be inserted through the welding hole 130, such that the cell leads L and the sensing assay S may be coupled to each other by welding. Moreover, the welding hole 130 may be formed in the jig receiving pillar 110 in a surface where the jig receiving pillar 110 and an end of the counter jig 200 contact each other, i.e., a surface of a receiving groove 112 or a receiving hole 111 described below, such that the cell leads L of the battery cells C and the counter jig 200 may contact each other, thereby supporting the positions of the cell leads L at welding points through the welding hole 130.

In this case, the jig receiving pillar 110 and the guide pillar 120 may include at least one heat-dissipating grooves 121 for dissipating heat generated in welding. More specifically, at least two heat-dissipating grooves 121 may be formed in each of the jig receiving pillar 110 and the guide pillar 120, and may be spaced apart from each other by a predetermined gap in the height direction.

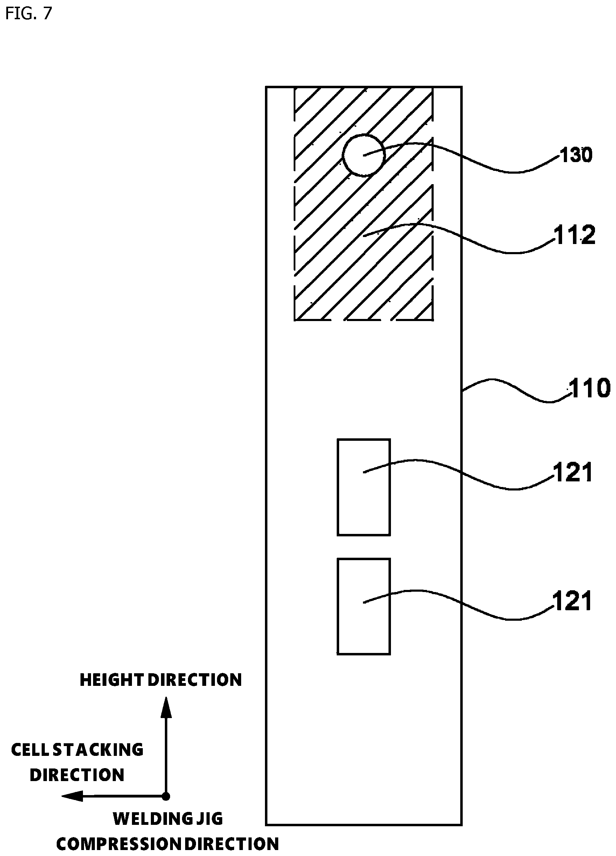

In a first embodiment for the jig receiving pillar 110, in at least any one of one end or the other end of the jig receiving pillar 110 in the predetermined height direction, the receiving groove 112 into which the counter jig 200 is inserted may be formed to a predetermined depth. For example, in a 1st-1 embodiment of the jig receiving pillar 110 shown in FIG. 7, the receiving groove 112 may be formed in any one of the end or the other end of the jig receiving pillar 110, such that the counter jig 200 may be interpolated into any one of the end or the other end. Thus, the height-direction lengths of the counter jig 200 and the receiving groove 112 are not excessively long, facilitating insertion of the counter jig 200 and making it possible to secure a space in which the heat-dissipating groove 121 for dissipating heat generated in welding is to be formed.

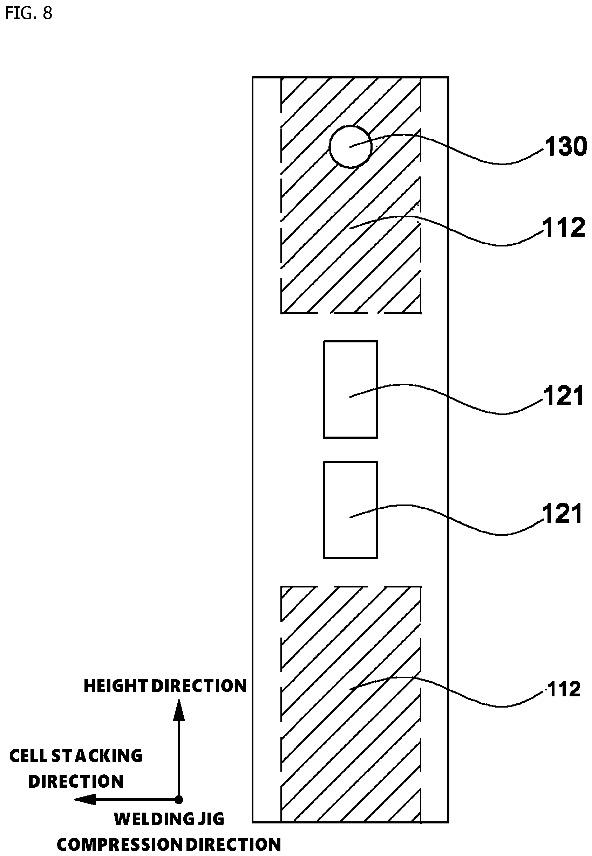

Alternatively, in a 1st-2 embodiment of the jig receiving pillar 110 shown in FIG. 8, the receiving groove 112 may be formed in each of the end or the other end of the jig receiving pillar 110, such that the counter jig 200 may be interpolated into both the end and the other end. Thus, as the height-direction lengths of the counter jig 200 and the receiving groove 112 are not excessively long, insertion of the counter jig 200 may be facilitated and a space in which the heat-dissipating groove 121 for dissipating heat generated in welding is to be formed may be secured, and as the counter jig 200 is inserted into both the end and the other end, the cell leads L may be supported more firmly than the embodiment shown in FIG. 7.

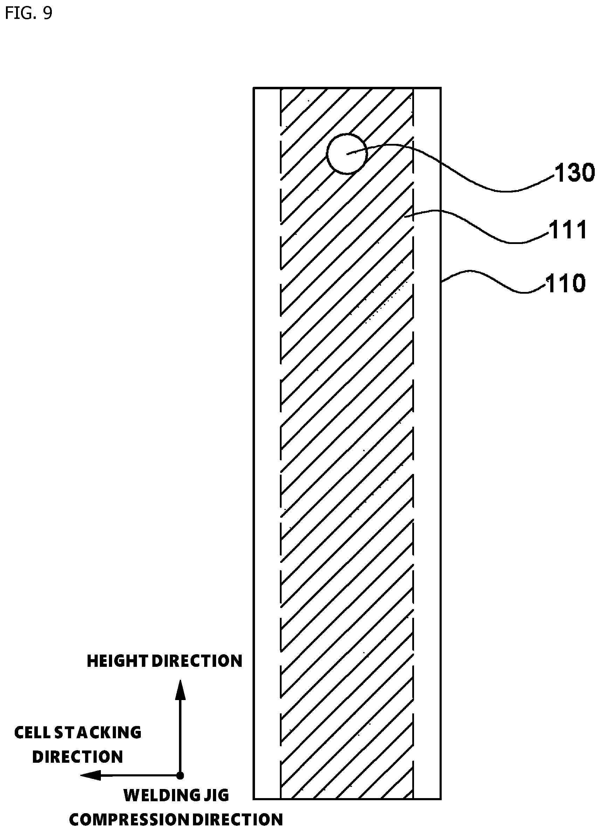

Moreover, in a second embodiment of the jig receiving pillar 110 shown in FIG. 9, the jig receiving pillar 110 may include the receiving hole 111 into which the counter jig 200 is inserted in the predetermined height direction. As such, the receiving hole 111 is formed to completely perforate the jig receiving pillar 110 in the height direction, thereby allowing the counter jig 200 to more strongly support the cell leads L.

In the cell lead support module according to the present disclosure structured as described above, the counter jig includes both the circular shape and the trapezoid shape to stably support the welding surface and control of the position of the counter jig is facilitated to improve assembly of the counter jig, thus securing a stable welding quality, whereby disposal costs and quality costs due to welding defects may be reduced.

The technical ideas should not be interpreted as being limited to the above-described embodiments of the present disclosure. An application range may be various, and various modifications may be implemented at the level of those of ordinary skill in the art without departing from the subject matter of the present disclosure set forth in the claims. Accordingly, such improvements and modifications fall within the scope of protection of the present disclosure as long as they are obvious to those of ordinary skill in the art.

### DESCRIPTION OF REFERENCE NUMERALS

1000: CELL LEAD SUPPORT
100: CELL LEAD GUIDE PORTION
110: JIG RECEIVING PILLAR
111: RECEIVING HOLE
112: RECEIVING GROOVE
120: GUIDE PILLAR
121: HEAT-DISSIPATING GROOVE
130: WELDING HOLE
200: COUNTER JIG
210: SUPPORT PORTION
220: AIMING PORTION
221: COUPLING REFERENCE POINT
230: SIDE SURFACE
B: BATTERY PACK
S: SENSING ASSAY
C: BATTERY CELL
L: BATTERY CELL LEAD

## Claims

1. A cell lead support module comprising:
a cell lead guide portion applied to an end of a battery pack, including an end coupled to a sensing assay, and configured to guide a battery cell in coupling to the battery cell; and
a counter jig interpolated into the cell lead guide portion to support a cell lead of the battery cell on a side of the battery cell,
wherein the counter jig comprises:
a support portion configured to support the cell lead in a first end of the counter jig contacting the cell lead of the battery cell; and
an aiming portion comprising a coupling reference point of the counter jig, in a second end of the counter jig.

2. The cell lead support module of claim 1, wherein the counter jig is a pillar extending in a height direction,
a terminal surface of the support portion is flat, the aiming portion comprises a cross-section in an arc shape having a central axis, and
the coupling reference point is a center of the arc.

3. The cell lead support module of claim 2, wherein the counter jig comprises a side surface connecting the support portion to the aiming portion, and
a chord connecting opposite ends of the arc formed on the cross-section of the aiming portion, the side surface of the counter jig, and a terminal of the support portion form a trapezoid shape.

4. The cell lead support module of claim 2 or 3, wherein the counter jig comprises a side surface connecting the support portion to the aiming portion, and
the side surface is formed in parallel to an outer surface of the cell lead guide portion, the outer surface facing a surface of the cell lead guide portion contacting the side surface.

5. The cell lead support module of any one of claims 1 to 4, wherein the cell lead guide portion comprises a jig receiving pillar in which the counter jig is received, and
the jig receiving pillar extends in a height direction perpendicular to a stacking direction of the battery cell and a compression direction of a welding jig.

6. The cell lead support module of claim 5, wherein the jig receiving pillar comprises, in at least any one of a first end or a second end in the height direction, a receiving groove into which the counter jig is inserted.

7. The cell lead support module of claim 5 or 6, wherein the jig receiving pillar comprises a receiving hole perforated, into which the counter jig is interpolated in the height direction.

8. The cell lead support module of any one of claims 5 to 7, wherein the cell lead guide portion comprises a guide pillar in which the counter jig is not received, and
the jig receiving pillar and the guide pillar are arranged alternately with each other in the stacking direction of the battery cell.

9. The cell lead support module of claim 8, wherein the jig receiving pillar and the guide pillar comprise at least one heat-dissipating groove.

10. The cell lead support module of claim 9, wherein the heat-dissipating groove is disposed in a region except for a region in which the receiving groove of the jig receiving pillar is formed in the height direction.
